(19) Europäisches Patentamt / European Patent Office / Office européen des brevets

(11) **EP 4 328 838 A1**

(12) **EUROPEAN PATENT APPLICATION**

(43) Date of publication:
**28.02.2024 Bulletin 2024/09**

(21) Application number: **23193029.8**

(22) Date of filing: **23.08.2023**

(51) International Patent Classification (IPC):
**G06Q 30/0226** (2023.01)    **G06Q 50/30** (2012.01)

(52) Cooperative Patent Classification (CPC):
**G06Q 30/0226; G06Q 50/40;** Y02P 90/84

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 KR 20220106749**

(71) Applicant: **Wrightbrothers Co., Ltd.**
**Seoul 04384 (KR)**

(72) Inventors:
• **KIM, Hee Soo**
**04384 Seoul (KR)**
• **KIM, Now**
**04384 Seoul (KR)**

(74) Representative: **BCKIP Part mbB**
**Siegfriedstraße 8**
**80803 München (DE)**

(54) **RELAY METHOD AND SERVER FOR EXCHANGE OF USER CARBON CREDIT AND POINT OF CONTRACTING COMPANY, AND COMPUTER READABLE STORAGE MEDIUM STORING INSTRUCTIONS TO PERFORM RELAY METHOD FOR EXCHANGE OF USER CARBON CREDIT AND POINT OF CONTRACTING COMPANY**

(57)    A relay server includes a memory storing one or more instructions; and a processor executing the one or more instructions stored in the memory, wherein the instructions, when executed by the processor, cause the processor to: obtain a certification data for a carbon reduction event performed by a user and provide a contracting company point-obtaining right to the user; exchange the contracting company point-obtaining right with a contracting company point payment-guaranteed by a contracting company; and provide the certification data or a revenue generated based on the certification data to the contracting company in pesponse to a guarantee of the contracting company for a user's use of the contracting company point.

Fig. 1

EP 4 328 838 A1

**Description**

## TECHNICAL FIELD

An embodiment of the present disclosure relates to a technology of providing points for a certification data generated from carbon reduction event.

## BACKGROUND

At present, a carbon footprint that is one of the main factors of global warming is being reduced step by step all over the world through Kyoto Protocol. Responsible countries or companies under Kyoto Protocol have limits on carbon footprints for respective periods and are supposed to compulsorily purchase and sell carbon credits for excessive footprints.

In this case, the carbon credit is a concept including an allotment and a credit. The allotment means a carbon emission right provided to main carbon emission sources such as a power generation facility or a production facility by the total carbon emission set in a nation or an area. The credit means an emission credit provided for corresponding projects as a certification showing reduction of a carbon footprint from a reference forecast in carbon reduction projects. According to the Protocol, responsible countries or companies can be assigned a new carbon credit by gaining recognition for a reduction result generated by investing in a carbon footprint reduction project.

Accordingly, responsible countries or companies are promoting use of bicycles by expanding bike lanes and designing various infrastructures such as bike round roads and bike express roads to reduction carbon emission and are making efforts to reduce carbon emission by providing incentives depending on use of bicycles.

Meanwhile, individuals are also making efforts to reduce carbon emission by using transportation that does not emit carbon such as walking, a bike, and a scooter, but appropriate compensation is not given for such individual efforts.

Accordingly, there is a need for a plan of giving fair compensation to individual subjects who take part in carbon emission reduction in order to encourage many people who stably run a total carbon emission system to reduce carbon emission.

## SUMMARY

An objective of an embodiment of the present disclosure is to provide a technology of providing contracting company points payment-guaranteed by contracting companies on the basis of the value of carbon credits converted for carbon footprints reduced by users.

However, objectives of the present disclosure are not limited to that described above and, though not stated, may include objectives that can be clearly understood by those skilled in the art from the following description.

In accordance with an aspect of the present disclosure, there is provided a relay server, relay server comprising a memory storing one or more instructions; and a processor executing the one or more instructions stored in the memory, wherein the instructions, when executed by the processor, cause the processor to: obtain a certification data for a carbon reduction event performed by a user and provide a contracting company point-obtaining right to the user; exchange the contracting company point-obtaining right with a contracting company point payment-guaranteed by a contracting company; and provide the certification data or a revenue generated based on the certification data to the contracting company in pesponse to a guarantee of the contracting company for a user's use of the contracting company point.

Also, the revenue generated based on the certification data may include a carbon credit on the basis of the certification data or an amount obtained by trading the carbon credit.

Also, the contracting company point-obtaining right may be subtracted by purchasing a product or using a service at the relay server or an affiliation server affiliated with the relay server until being exchanged with the contracting company point, and may include a first point which is a preliminary request means that is exchangeable to a usage right of the contracting company point in accordance with exchange application by the user.

Also, an amount of the first point may be determined based on a current price of the carbon credit on the basis of the certification data.

Also, the processor may be configured to exchange the contracting company point-obtaining right with the contracting company point in accordance with a choice of the user or an expiration of a predetermined period.

Also, the processor may be configured to provide consideration for the contracting company point as much as an amount payment-guaranteed by the contracting company. Herein, the amount payment-guaranteed by the contracting company may be determined based on a price determined as the condition for a payment for the certification data, the carbon credit on the basis of the certification data, or an amount obtained by trading the carbon credit, to the contracting company at a price lower than a current price of a carbon credit to contracting company.

Also, the contracting company point-obtaining right may include a first point of which an amount is determined based on a current price of the carbon credit on the basis of the certification data. Also, the processor is configured to provide the certification data or the revenue generated based on the certification data on the basis of a price lower than a current price of a carbon credit to contracting company.

Also, the processor may be configured to predetermine an exchange rate for the first point to a contracting company point on the basis of a obtained value of the point of the contracting company based on a price lower than the current price of the carbon credit, with a value of the first point determined based on the current price of the carbon credit, and store the predetermined exchange rate for the first point to the contracting company point.

Also, the processor may be configured to exchange the first point of the user to a contracting company point of a predetermined exchange rate based on the price lower than the current price of the carbon credit.

Also, the first point may be configured to be used in an affiliation server affiliated with the relay server and have an expiration period.

Also, the contracting company may include a plurality of the contracting company, and the processor may be configured to: select a contracting company among the plurality of the contracting company, and exchange the contracting company point-obtaining right with the contracting company point of the selected contracting company.

Also, the certification data may include information about a distance that the user moved without using a carbon emission transportation means.

Also, the certification data may include details of second-hand transaction for a transportation means by the user as the certification data.

In accordance with another aspect of the present disclosure, there is provided a relay method that is performed by a relay server, the relay method comprising obtaining a certification data for a carbon reduction event performed by a user and providing a contracting company point-obtaining right to the user; exchange the contracting company point-obtaining right with a contracting company point payment-guaranteed by a contracting company; and providing the certification data or a revenue generated based on the certification data to the contracting company in pesponse to a guarantee of the contracting company for a user's use of the contracting company point.

In accordance with another aspect of the present disclosure, there is provided a non-transitory computer-readable recording medium storing a computer program, which comprises instructions for a processor to perform a relay method, the method comprising: obtaining a certification data for a carbon reduction event performed by a user and providing a contracting company point-obtaining right to the user; exchanging the contracting company point-obtaining right with a contracting company point payment-guaranteed by a contracting company; and providing the certification data or a revenue generated based on the certification data to the contracting company in pesponse to a guarantee of the contracting company for a user's use of the contracting company point.

According to an embodiment of the present disclosure, it is possible to compensate efforts for a carbon footprint reduced by a user by fixing a price proportioned to the value of a carbon footprint that can be assigned through a carbon reduction event performed by the user.

Further, an embodiment of the present disclosure can function as a platform that obtains a large quantity of carbon credit by accumulating individual certification data obtained from users, respectively. An embodiment of the present disclosure can distribute a use right for payment-guaranteed points by a contracting company to users instead of transferring an obtained carbon credit to a contracting company so that efforts of the users are recognized as carbon credits and compensated as cash.

Accordingly, there is the advantage in that a user can receive a first point or a second point as compensation through actual data performed to reduce carbon emission and can use the first point at a shopping mall affiliated with a relay server or can use the second point as cash. A contracting company can obtain a carbon credit at a lower price than the actual current price of the carbon credit and can obtain advantages such as customer retention by distributing a payment-guaranteed contracting company point by the contracting company to a user of an actual card. Further, an operation company of a relay server can accumulate data of individuals from which it is difficult to gain recognition for efforts for carbon reduction, and exchange the data with an actual carbon credit, and can provide benefits to both a user and a contracting company through the obtained carbon credit.

Accordingly, an embodiment of the present disclosure makes it possible to actively operate an incentive system according to reduction of carbon emission while actively following policies by a government and demands of the times, and certification data of individuals related to carbon emission reduction obtained through the embodiment can be used in carbon credit trade between companies or countries.

The effects of the disclosure are not limited to the effects described above and other effects can be clearly understood by those skilled in the art from the following description.

## BRIEF DESCRIPTION OF THE DRAWINGS

Fig. 1 is a configuration diagram of a point providing system according to an embodiment of the present disclosure.

Fig. 2 is a function block diagram of a relay server according to an embodiment.

Fig. 3 is a flowchart illustrating an operation that the relay server according to an embodiment performs.

Fig. 4 is an exemplary diagram of data in which carbon footprints are defined for respective travel distances of transportation means in accordance with an embodiment.

Figs. 5A to 5D are an exemplary view of data in which carbon footprints are defined for respective manufacture weights of bicycle parts made of predetermined materials in accordance with an embodiment.

Fig. 6 is an exemplary view of data in which carbon footprints are defined for respective bicycle frames made of predetermined materials in accordance with an embodiment.

Fig. 7 is a flowchart illustrating an operation that the relay server according to another embodiment performs.

## DETAILED DESCRIPTION

The advantages and features of the embodiments and the methods of accomplishing the embodiments will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments. Therefore, the embodiments are to be defined only by the scope of the appended claims.

Terms used in the present specification will be briefly described, and the present disclosure will be described in detail.

In terms used in the present disclosure, general terms currently as widely used as possible while considering functions in the present disclosure are used. However, the terms may vary according to the intention or precedent of a technician working in the field, the emergence of new technologies, and the like. In addition, in certain cases, there are terms arbitrarily selected by the applicant, and in this case, the meaning of the terms will be described in detail in the description of the corresponding invention. Therefore, the terms used in the present disclosure should be defined based on the meaning of the terms and the overall contents of the present disclosure, not just the name of the terms.

When it is described that a part in the overall specification "includes" a certain component, this means that other components may be further included instead of excluding other components unless specifically stated to the contrary.

In addition, a term such as a "unit" or a "portion" used in the specification means a software component or a hardware component such as FPGA or ASIC, and the "unit" or the "portion" performs a certain role. However, the "unit" or the "portion" is not limited to software or hardware. The "portion" or the "unit" may be configured to be in an addressable storage medium, or may be configured to reproduce one or more processors. Thus, as an example, the "unit" or the "portion" includes components (such as software components, object-oriented software components, class components, and task components), processes, functions, properties, procedures, subroutines, segments of program code, drivers, firmware, microcode, circuits, data, database, data structures, tables, arrays, and variables. The functions provided in the components and "unit" may be combined into a smaller number of components and "units" or may be further divided into additional components and "units".

Hereinafter, the embodiment of the present disclosure will be described in detail with reference to the accompanying drawings so that those of ordinary skill in the art may easily implement the present disclosure. In the drawings, portions not related to the description are omitted in order to clearly describe the present disclosure.

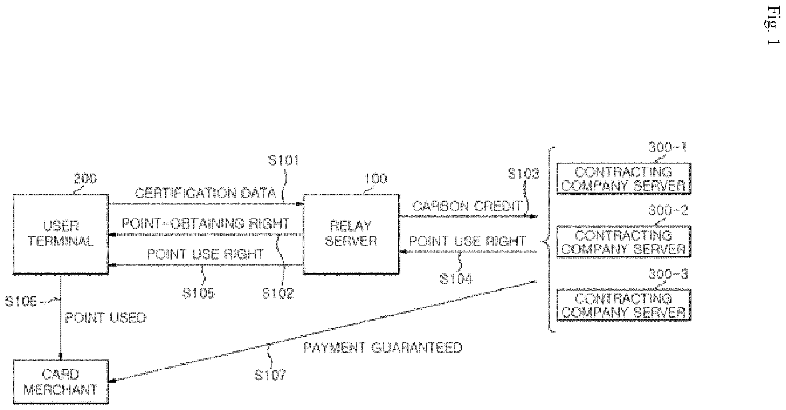

Fig. 1 is a configuration diagram of a point providing system according to an embodiment of the present disclosure.

Referring to Fig. 1, the point providing system 10 according to an embodiment may include a relay server 100, a user terminal 200, and a contracting company server 300.

The relay server 100 can perform a relay function of compensating a user with a use right for a contracting company payment-guaranteed point by a contracting company in return for obtaining a carbon credit through conformation data for a reduced carbon footprint and transferring the carbon credit to the contracting company.

The user terminal 200 is a terminal that is used by a user of services that are provided by the relay server 100 and a card that is provided by the contracting server 300. The user terminal 200 can create and transfer certification data for a carbon reduction event performed by the user to the relay server 100 and can obtain recompense for transfer of the certification data. The carbon reduction event, which is record performed by a user to reduce a carbon footprint, may include various events that can be proved through data.

The contracting company server (300) is a server operated by a company that guarantees payment in cash or consideration for transactions made by users at affiliated merchants of the contracting company. The contracting company issues cards such as debit cards, credit cards, and member-exclusive cards to users. The contracting company server (300) determines the payment transactions made by users at card-affiliated merchants using contracting company points (or mileage), and pays the actual payment amount (e.g., cash) to the card-affiliated merchants. An affiliated merchant refers to a store that handles cards (e.g., debit cards, credit cards, member-exclusive cards) provided by the contracting company through a contract with the contracting company server (300).

For example, the contracting company server (300) can be operated by general card companies such as Lotte Card®, Kookmin Card®, Shinhan Card®, Woori Card®, NongHyup Card®, and Hyundai Card®. Additionally, the contracting company server can be operated by companies that provide mileage, which can be used as cash within subsidiary services, or guarantee cash payments for designated services, such as Korean Air®, Asiana Airlines®, and other companies. Hereinafter, the company operating the contractor server (300) is referred to as the term "contracting company", and it does not solely include general card companies but encompasses all entities that provide the services described for the contracting company server (300). In other words, the role of the contracting company server (300) as described herein can be referred to by various names such as "card company server (300)" or "cooperation company server (300)." Similarly, any entity performing the role of the "contracting company" may also be referred to as "card company" or "cooperation company" in this document."

The contracting company server 300 can issue a contracting company point, which can be used as cash, to a user, and when a user uses the contracting company point at a card-affiliated merchants, the contracting company server 300 can guarantee cash payment to the card-affiliated merchants by the used contracting company point. For example, contracting companies operate their own cash payment guarantee points such as L.POINT of Lotte Card, Pointree of Kookmin Card, My Shinhan Point of Shinhan Card, Wibee Honey Money of Woori Card, Cheum Point of Nonghyup Card, and M Point of Hyundai Card.

The relay server 100 can function as a platform that obtains a large quantity of carbon credits by collecting certification data obtained from users, and can obtain a use right for points payment-guaranteed in cash by a plurality of contracting companies in return for transferring the obtained carbon credits to the contracting companies and can redistribute the use right to users so that efforts by the users are recognized as carbon credits and compensated with cash.

An embodiment of the relay system 10 for performing this operation can be performed like the operations of S101 to S107 of Fig. 1. "The identification numbers in S101 to S107 of Fig. 1 are used for convenience of understanding, and the identification numbers do not restrict the chronological order of the examples. The examples provided in this document illustrate that the sequence of S101 to S107 in Fig. 1 can be altered for the execution of operations, and certain steps within S101 to S107 may be omitted or modified in the embodiments." In the description of an embodiment, an operation performed by a 'user' in person or a 'user' may be construed as a subject of the 'user terminal 200' and an operation performed by a 'contracting company' or a 'contracting company' may be construed as a subject of the 'contracting company server 300'.

In a step S101 of Fig. 1, the relay server 100 can obtain a certification data for a carbon footprint reduced by a user.

In a step S102 of Fig. 1, the relay server 100 can provide a contracting company point-obtaining right corresponding to the value of a carbon credit, which can be obtained through the certification data, to the user. For example, the contracting company point-obtaining right may include data that give a right enabling a specific user to obtain a contracting company point at a specific point in time to a user account or object data (ex. a 'first point' to be described below) having a function enabling a specific user to exchange a contracting company point at a specific point in time.

In a step S103 of Fig. 1, the relay server 100 can obtain a carbon credit using the obtained certification data. For example, the relay server 100 can obtain a carbon credit by gaining recognition for certification data that are reduction results generated by performing a carbon footprint reduction project according to Kyoto Protocol. Accordingly, the relay server 100 can transfer the obtained carbon credit to the contracting company server 300.

In a step S104 of Fig. 1, the relay server 100 can obtain a contracting company point use right payment-guaranteed by the contracting company server 300 in return for transferring the obtained carbon credit to the contracting company server 300. For example, the contracting company point use right may include data that give a right enabling a specific user to use a contracting company point to a user account or object data (ex. a 'second point' to be described below) having a function enabling a specific user to use a contracting company point.

In a step S105 of Fig. 1, the relay server 100 can perform an operation of exchanging the contracting company point-obtaining right of the user with the contracting company point use right in accordance with application from the user terminal 200.

In a step S106 of Fig. 1, the user terminal 200 can use the provided contracting company point at a card-affiliated merchant.

In a step S107 of Fig. 1, the contracting company server 300 can transfer cash corresponding to the contracting company point used by the user at the card-affiliated merchant to a account of the card-affiliated merchant.

The relay server 100, the user terminal 200, and the contracting company server 300 according to an embodiment of the present disclosure may be implemented into various types of devices that can transmit and receive information through a network. For example, the relay server 100, the user terminal 200, and the contracting company server 300 may include a mobile communication device (e.g., smartphone), a computer system, a mobile multimedia device, a laptop, a tablet PC, etc.

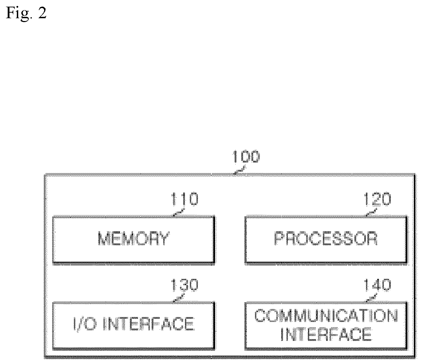

Hereafter, the configuration included in the relay server 100 according to an embodiment of the present disclosure is described with reference to Fig. 2.

Fig. 2 is a function block diagram of the relay server 100 according to an embodiment.

Referring to Fig. 2, the relay server 100 according to an embodiment may include a memory 110, a processor 120, an I/O interface 130, and a communication interface 140.

The memory 100 can store data obtained from an external device (ex. the user terminal 200, the contracting company server 300, or the like) or data created by itself. The memory 110 can store commands that can perform operation of the processor 120.

The processor 120 can control the general operation of the relay server 100. The processor 120 can execute the commands stored in the memory 110. The operation of the relay server 100 according to an embodiment of the present disclosure may be understood as an operation that is performed by the processor 120.

The I/O interface 130 may include a hardware interface or a software interface that enables a manager who controls the relay server 100 to input specific information or that outputs specific information to the manager.

The communication interface 140 enables the relay server 100 to transmit and receive information to and from an external device (ex. the user terminal 200, or the contracting company server 300) through a communication network. For this purpose, the communication interface 140 may include a wireless communication module or a wired communication module.

The relay server 100 may be implemented in various types of devices that can perform an operation through the processor 120 and can transmit and receive information through a network. For example, the relay server 100 may include a mobile communication device, a smartphone, a computer system, a mobile multimedia device, a laptop, a tablet PC, etc.

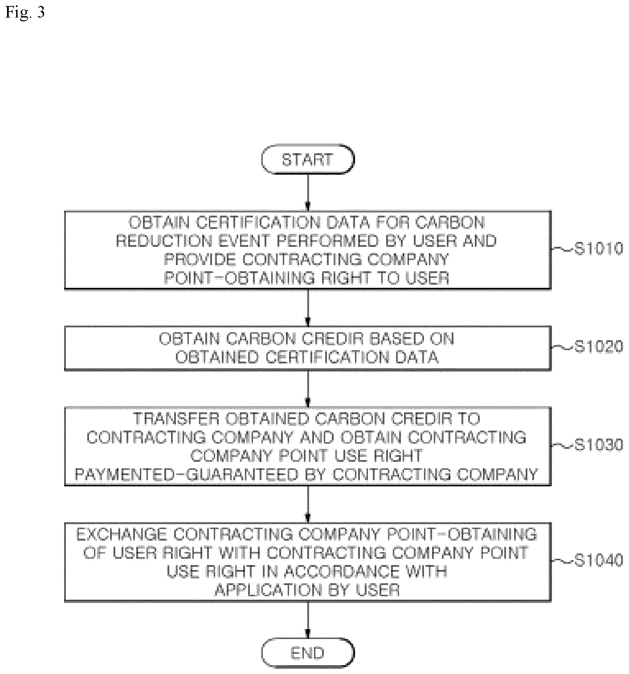

Hereafter, an embodiment of a detailed operation that the relay server 100 performs through the configuration described above is described with reference to Fig. 3 to Fig. 6

Fig. 3 is a flowchart of an operation that the relay server according to an embodiment performs. The operation of the relay server 100 according to an embodiment of the present disclosure may be understood as an operation that is performed by the processor 120.

In step S1010, the relay server 100 can obtain certification data for a carbon reduction event performed by a user and can give a contracting company point-obtaining right to the user.

For example, the relay server 100 can obtain, as certification data, information about a distance that a user moved by a non-carbon emission means (ex. walking, a bicycle, a scooter, etc.) instead of a carbon emission transportation means (ex. a subway, a bus, a subway, a motorcycle, a car, etc.). The user terminal 200 can transmit data obtained by measuring the distance that the user moved without using a carbon emission transportation means, as certification data, to the relay server 100. For example, the user terminal 200 can create data by measuring a distance, which a user moved using a bicycle, using STRAVA API, etc. Hereafter, in the description of embodiments, it is exemplified that a user moved by a bicycle as a non-carbon emission means, but embodiments of the present disclosure may include various non-carbon emission means such as not only a bicycle, but walking, running, etc.

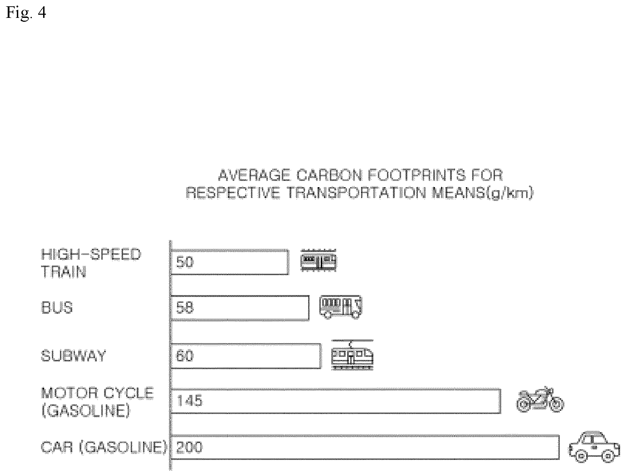

Fig. 4 is an exemplary diagram of data in which carbon footprints are defined for respective travel distances of transportation means in accordance with an embodiment.

Referring to Fig. 4, the relay server 100 can store in advance data for carbon footprints for respective travel distances of carbon emission transportation means. The relay server 100 can calculate carbon footprints reduced in accordance with the distances, which a user moved without using a carbon emission transportation means, on the basis of the certification data transmitted from the user terminal 200 with reference to the data stored in advance.

For example, the relay server 100 may be set to determine that a subway was replaced when the distance a user moved using a bicycle is 5km or more and less than 10km and that a car was replaced when the distance is 10km or more. Accordingly, when certification data transmitted by a user includes information that the user moved 7km using a bicycle, the relay server 100 determines that the user used a bicycle instead of moving 7km by subway, and can provide a contracting company point-obtaining right proportioned to '420g' by reflecting carbon footprint (60g) for 1km movement by subway.

Further, when certification data transmitted by a user includes information that the user moved 100km using a bicycle, the relay server 100 determines that the user moved 100km by bicycle instead of car, and can provide a contracting company point-obtaining right proportioned to '20kg' by reflecting carbon footprint (200g) for 1km movement by car.

The relay server 100 can fix a price for obtaining a carbon credit proportioned to the carbon footprint reduced by the user on the basis of the current price of a carbon credit. For example, when the current price of a carbon credit is $ 20 per ton, the relay server 100 can fix a price of $ 0.2 per carbon footprint of 1kg. Accordingly, when it is determined that a user reduced a carbon footprint of 20kg by moving 100km by bicycle, the relay server 100 can provide a contracting company point-obtaining right proportioned to $ 4 to the corresponding user terminal 100. That is, the user can obtain a contracting company point-obtaining right proportioned to $ 0.4 per km by replacing a car.

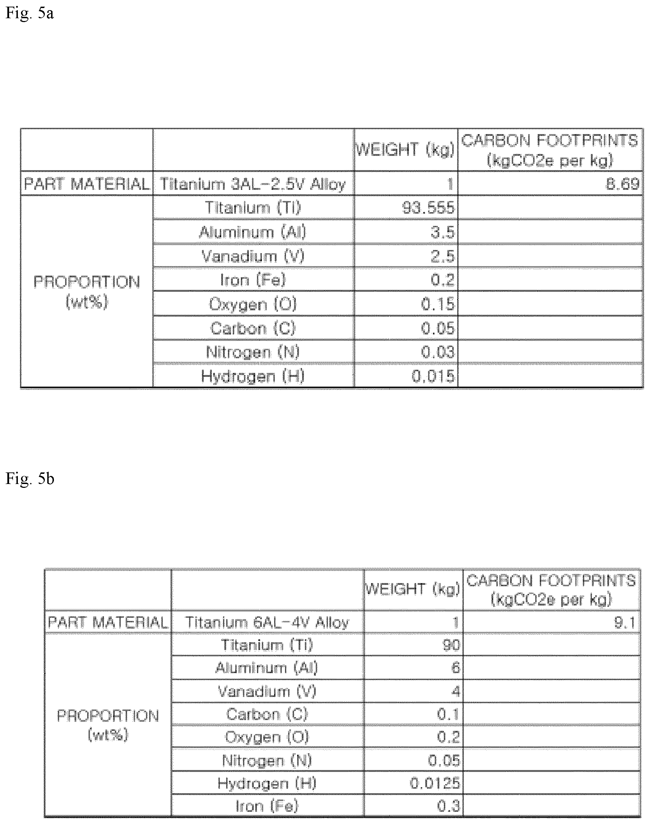

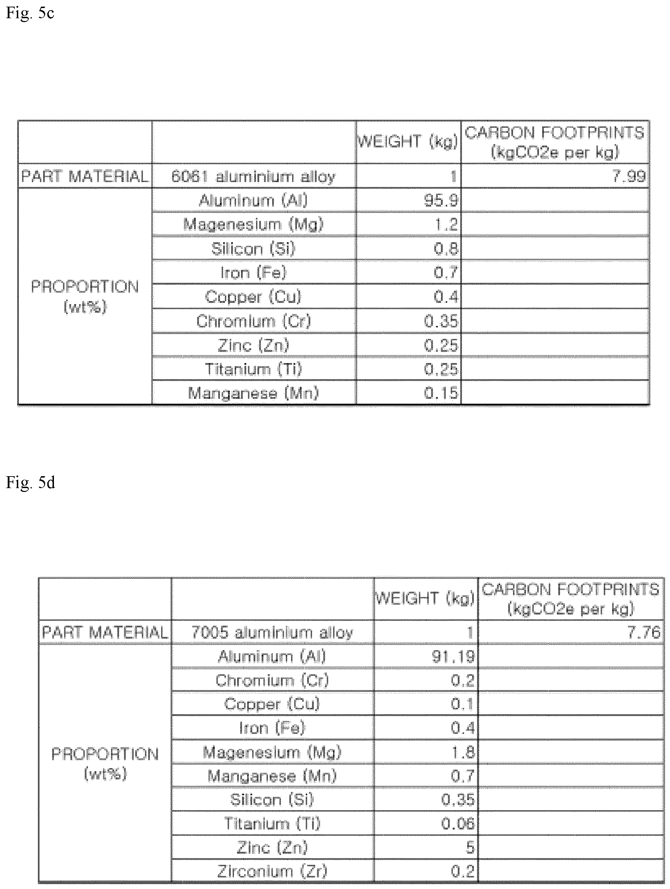

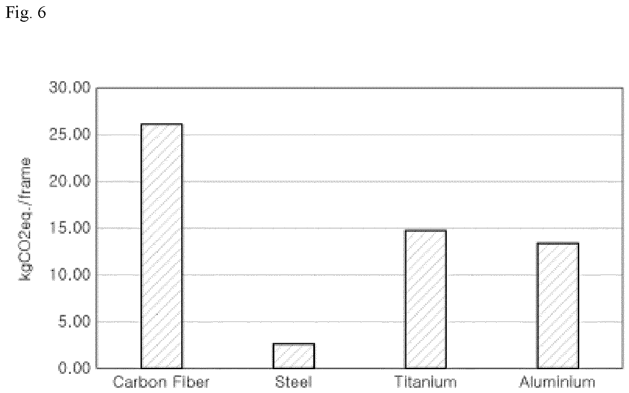

For example, the relay server 100 can obtain information about second-hand transaction details for a predetermined transportation means (hereafter, exemplified as a 'bicycle') by a user as certification data. When obtaining the certification data for second-hand transaction details, the relay server 100 can determine that the user reduced a carbon footprint through the secondhand transaction instead of new production of the secondhand transacted bicycle. The relay server 100 can discriminate the parts of bicycles to be transacted secondhand by storing in advance specific information of the parts in accordance with the models of the bicycles or can discriminate the parts of bicycles to be transacted secondhand through an artificial intelligence model. When the relay server 100 discriminates the parts of a bicycle to be transacted secondhand, it is possible to calculate the carbon footprint that is generated when manufacturing each of the parts of the bicycle. For example, the relay server 100, as in the following Figs. 5A to 5D or Fig. 6, can calculate the carbon footprint that is generated when manufacturing each of parts by multiplying the carbon footprint for the weight of each part by the weight of the part in accordance with data in which carbon footprints are defined.

Figs. 5A to 5D are an exemplary view of data in which carbon footprints are defined for respective manufacture weights of bicycle parts made of predetermined materials in accordance with an embodiment.

Referring to Figs. 5A to 5D, when manufacturing materials of parts of a bicycle (ex. Titanium 3AL-2.5V Alloy, Titanium 6AL-4V Alloy, 6061 aluminium alloy, 7005 aluminium alloy, etc.), carbon footprints for respective manufacture weights of the materials can be stored in data defining carbon footprints. For example, Fig. 5A shows data defining carbon footprints when bicycle parts are made of Titanium 3AL-2.5V Alloy. In the data defining carbon footprints, the composition ratio of the elements constituting Titanium 3AL-2.5V Alloy and the carbon footprint for each of the elements may be stored and it may be stored that Titanium 3AL-2.5V Alloy emits a carbon amount of 8.69 kgCO2e per kg when 1kg of Titanium 3AL-2.5V Alloy is manufactured on the basis of the composition ratio of the elements constituting Titanium 3AL-2.5V Alloy and the carbon footprint for each of the elements.

Fig. 6 is an exemplary view of data in which carbon footprints are defined for respective frames of a bicycle made of predetermined materials in accordance with an embodiment.

Referring to Fig. 6, carbon footprints for respective frames when the materials (ex. Carbon Fiber, Steel, Titanium, Aluminium, etc.) constituting the frames of a bicycle are manufactured may be stored in data defining carbon footprints. For example, when the frames of a bicycle are made of Carbon Fiber, it may be stored that a carbon amount of 26.07 kgCO2eq./frame is emitted for one frame. Specification information DB 112 can store not only a carbon footprint for each of the materials of frames exemplified above, but data in which a carbon footprint is defined for one frame/wheel/driving train unit for the kinds of a frame, wheels, and a driving train that are three main parts constituting a bicycle.

The relay server 100, through the data of Figs. 5A to 5D or Fig. 6, can determine a carbon footprint due to manufacture of a bicycle by summing up carbon footprints calculated for all of discriminated parts.

For example, when the kinds of the parts of a bicycle are specified, the relay server 100 can calculate a carbon footprint when each of the parts is manufactured by multiplying a carbon footprint for the weight of each part by the weight of the part in accordance with data in which carbon footprints are defined. When the kind of a frame of the parts of a bicycle is specified, the relay server 100 can calculate a carbon footprint when each of the parts is manufactured by multiplying a carbon footprint of the frame by the weight of the part in accordance with data in which carbon footprints are defined. Through this operation, the relay server 100 can determine a carbon footprint due to manufacture of a bicycle by summing up the carbon footprints calculated for all of the discriminated parts.

For example, the relay server 100 can discriminate 3 Zone parts constituting the frame, wheels, and driving train of a bicycle to be transacted secondhand. The relay server 100 can calculate a carbon footprint when the 3 zone parts are manufactured by multiplying the carbon footprints for manufacture weights corresponding to the materials of the discriminated 3 Zone parts (frame, wheels, and driving train) by the weights of the 3 Zone parts, respectively, in accordance with data in which carbon footprints are defined. Alternatively, the relay server 100 can calculate a carbon footprint when the 3 zone parts are manufactured by multiplying the carbon footprints for manufacture frame/wheel/driving train corresponding to the materials of the discriminated 3 Zone parts (frame, wheels, and driving train) by the weights of the 3 Zone parts, respectively, in accordance with data in which carbon footprints are defined. Thereafter, the relay server 100 can search information about other bicycles completed with 3 Zone parts the same as the discriminated 3 Zone parts from data stored in the memory 110 or an external DB, and can calculate the carbon footprints of other parts excluding the 3 Zone parts of the bicycle on the basis of the average of the carbon footprints that are emitted from other parts excluding the 3 Zone parts of the other bicycles. The relay server 100 can determine a carbon footprint due to manufacture of a bicycle to be transacted secondhand by summing up the carbon footprints when 3 Zone parts are manufactured and the carbon footprints of other parts. In the embodiment described above, on the basis of the fact that other parts are made of similar materials and have similar weights in consideration of linkage and compatibility of bicycles having the same 3 Zone parts, when it is difficult to discriminate other parts excluding 3 Zones, it is possible to effectively calculate a carbon footprint of an entire bicycle by determining the carbon footprints of other parts by discriminating 3 Zone parts and liking pre-stored information.

The relay server 100 can fix a price for obtaining a carbon credit proportioned to the carbon footprint reduced by a user through second-hand transaction on the basis of the current price of a carbon credit. For example, when the current price of a carbon credit is $ 20 per ton, the relay server 100 can fix a price of $ 0.2 Won per carbon footprint of 1kg. Accordingly, when it is determined that carbon corresponding to 20kg is emitted to manufacture the bicycle transacted secondhand by the user, it is possible to provide a contracting company point-obtaining right, which corresponds to $ 4, to the user.

For example, the relay server 100 can provide a user with a 'first point' of an amount corresponding to a carbon credit, which can be obtained from certification data, on the basis of the current price of a carbon credit. For example, when the current price of a carbon credit is $ 20 per ton and it is determined that a user reduced a carbon footprint of 20kg, the relay server 100 can provide a first point corresponding to $ 4 to the user terminal 200. For example, the first point having the value of $ 4 may be subtracted by purchasing a product or using a service at the relay server 100 or an affiliation server affiliated with the relay server 100 and may function as a preliminary request means that can be exchanged with a contracting company point (ex. second point) to be described below in accordance with exchange application by the user.

In step S1020, the relay server 100 can obtain a carbon credit on the basis of the certification data obtained from the user terminal 200. For example, when the current price of a carbon credit is $ 20 per ton, the relay server 100 collects certification data corresponding to reduction of 1 ton obtained from a plurality of users and gains recognition for a reduction result generated by a carbon footprint reduction project, and accordingly, the relay server 100 can be assigned a new carbon credit for 1 ton having the value of $ 20 or can purchase a carbon credit for 1 ton having the value of $ 20 at a carbon credit market.

In step S1030, the relay server 10 can transfer the obtained carbon credit to a predetermined contracting company and obtain a contracting company point use right payment-guaranteed by the contracting company. For example, the relay server 100 can transfer the obtained carbon credit to a contracting company, which needs a carbon credit, at a lower price than the current price, obtain a contracting company point use right proportioned to the transfer price to the contracting company, and redistribute a second point that is an obtained contracting company point to a user. For example, when the current price of a carbon credit for 1 ton is $ 20, the relay server 100 can transfer the carbon credit for 1 ton to a contracting company at the price of $ 10 and can be assigned a use right for a second point having the value of $ 10 for the transferred carbon credit for 1 ton. In this case, when the user uses the second point through a check card, a credit card, or an account, the store at which the second point was used can be guaranteed payment in cash by a corresponding contracting company. For example, the second point may include L.POINT® of Lotte Card®, Pointree® of Kookmin Card®, My Shinhan Point® of Shinhan Card®, Wibee Honey Money® of Woori Card®, Cheum Point® of Nonghyup Card®, and M Point® of Hyundai Card®.

In step S1040, the relay server 100 can exchange the contracting company point-obtaining right of the user with a contracting company point use right in accordance with application by the user. For example, when the relay server 100 transfers a carbon credit to a predetermined contracting company at a lower price than the current price, the relay server 100 can exchange the first point with the second point at the ratio determined as shown in Equation 1.

$$\text{<Equation 1>}$$
$$first\ point \times \frac{transfer\ price}{Current\ price\ of\ carbon\ credit} = second\ point$$

For example, the relay server 100 can obtain a contracting company point use right from each of a plurality of contracting companies by transferring an obtained carbon credit to the contracting companies, and can exchange it with a contracting company point use right of a contracting company selected from the plurality of contracting companies by a user in accordance with application by the user.

For example, it is assumed that a user requests exchange with a second point of a contracting company A, the current price of a carbon credit is $ 20 per ton, and the relay server 100 transfers a carbon credit for 1 ton to a server 300-1 of the contracting company A at the price of $ 10. In this case, if the user obtains a first point corresponding to $ 4 on the basis of the current price of a carbon credit, when the user requests exchange with the second point of the contracting company A, the first point of $ 4 can be exchanged with a second point of $2.

For example, it is assumed that a user requests exchange with a second point of a contracting company B, the current price of a carbon credit is $ 20 per ton, and the relay server 100 transfers a carbon credit for 1 ton to a server 300-2 of the contracting company B at the price of $ 15. In this case, if the user obtains a first point corresponding to $ 4 on the basis of the current price of a carbon credit, when the user requests exchange with the second point of the contracting company B, the first point of $ 4 can be exchanged with a second point of $ 3.

In this way, the relay server 100 can provide a second point of an amount proportioned to the value of a first point requested to be exchanged by a user to a check card, a credit card, or an account of the user in consideration of the current price of a carbon credit and a contracting company transfer price.

Further, an expiration period may be set for the first point, and when there is a first point to be expired of first points that a user has, it is possible to automatically convert the first point into a second point of a ratio corresponding to the first point to be expired and provide the second point to a check card, a credit card, or an account of the user.

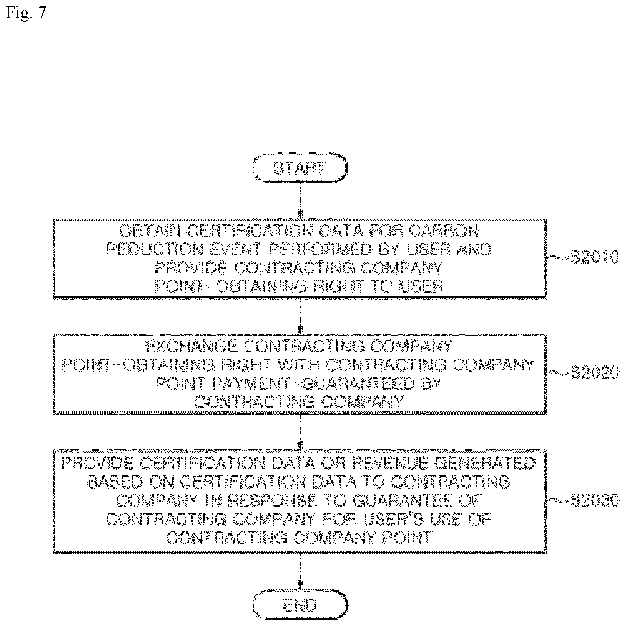

Fig. 7 is a flowchart illustrating an operation that the relay server according to another embodiment performs.

Referring to Fig. 7, in step S2010, the relay server 100 can obtain a certification data for a carbon reduction event performed by a user and provide a contracting company point-obtaining right to the user.

For example, the relay server 100 can obtain, as certification data, information about a distance that a user moved by a non-carbon emission means (ex. walking, a bicycle, a scooter, etc.) instead of a carbon emission transportation means (ex. a subway, a bus, a subway, a motorcycle, a car, etc.). The user terminal 200 can transmit data obtained by measuring the distance that the user moved without using a carbon emission transportation means, as certification data, to the relay server 100. For example, the user terminal 200 can create data by measuring a distance, which a user moved using a bicycle, using STRAVA API, etc. Hereafter, in the description of embodiments, it is exemplified that a user moved by a bicycle as a non-carbon emission means, but embodiments of the present disclosure may include various non-carbon emission means such as not only a bicycle, but walking, running, etc.

In step S2020, the relay server 100 can exchange the contracting company point-obtaining right with a contracting company point payment-guaranteed by a contracting company.

In step S2030, the relay server 100 can provide the certification data or a revenue generated based on the certification data to the contracting company in pesponse to a guarantee of the contracting company for a user's use of the contracting company point. Herein, the revenue generated based on the certification data includes a carbon credit on the basis of the certification data or an amount obtained by trading the carbon credit.

According to the embodiment described above, it is possible to compensate efforts for a carbon footprint reduced by a user by fixing a price proportioned to the value of a carbon footprint that can be assigned through a carbon reduction event performed by the user. Further, an embodiment of the present disclosure can function as a platform that obtains a large quantity of carbon credit by accumulating individual certification data obtained from users, respectively. An embodiment of the present disclosure can distribute a use right for points payment-guaranteed by a contracting company to users instead of transferring an obtained carbon credit to a contracting company so that efforts of the users are recognized as carbon credits and compensated as cash.

Accordingly, there is an advantage in that a user can receive a first point or a second point as compensation through actual data performed to reduce carbon emission can use the first point at a shopping mall affiliated with a relay server or can use the second point as cash. A contracting company can obtain a carbon credit at a lower price than the actual current price of a carbon credit and can obtain advantages such as customer retention by distributing a contracting company payment-guaranteed point by the contracting company to a user of an actual card. Further, an operation company of a relay server can accumulate data of individuals from which it is difficult to gain recognition for efforts for carbon reduction, and exchange the data with an actual carbon credit, and can provide benefits to both a user and a contracting company through the obtained carbon credit.

Accordingly, an embodiment of the present disclosure makes it possible to actively operate an incentive system according to reduction of carbon emission actively following policies by a government and demands of the times, and certification data of individuals related to carbon emission reduction obtained through the embodiment can be used in carbon credit trade between companies or countries.

Combinations of steps in each flowchart attached to the present disclosure may be executed by computer program instructions. Since the computer program instructions can be mounted on a processor of a general-purpose computer, a special purpose computer, or other programmable data processing equipment, the instructions executed by the processor of the computer or other programmable data processing equipment create a means for performing the functions described in each step of the flowchart. The computer program instructions can also be stored on a computer-usable or computer-readable storage medium which can be directed to a computer or other programmable data processing equipment to implement a function in a specific manner. Accordingly, the instructions stored on the computer-usable or computer-readable recording medium can also produce an article of manufacture containing an instruction means which performs the functions described in each step of the flowchart. The computer program instructions can also be mounted on a computer or other programmable data processing equipment. Accordingly, a series of operational steps are performed on a computer or other programmable data processing equipment to create a computer-executable process, and it is also possible for instructions to perform a computer or other programmable data processing equipment to provide steps for performing the functions described in each step of the flowchart.

In addition, each step may represent a module, a segment, or a portion of codes which contains one or more executable instructions for executing the specified logical function(s). It should also be noted that in some alternative embodiments, the functions mentioned in the steps may occur out of order. For example, two steps illustrated in succession may in fact be performed substantially simultaneously, or the steps may sometimes be performed in a reverse order depending on the corresponding function.

The above description is merely exemplary description of the technical scope of the present disclosure, and it will be understood by those skilled in the art that various changes and modifications can be made without departing from original characteristics of the present disclosure. Therefore, the embodiments disclosed in the present disclosure are intended to explain, not to limit, the technical scope of the present disclosure, and the technical scope of the present disclosure is not limited by the embodiments. The protection scope of the present disclosure should be interpreted based on the following claims and it should be appreciated that all technical scopes included within a range equivalent thereto are included in the protection scope of the present disclosure.

**Claims**

1. A relay server comprising:

   a memory storing one or more instructions; and
   a processor executing the one or more instructions stored in the memory, wherein the instructions, when executed by the processor, cause the processor to:

   obtain a certification data for a carbon reduction event performed by a user and provide a contracting company point-obtaining right to the user;
   exchange the contracting company point-obtaining right with a contracting company point payment-guaranteed by a contracting company; and
   provide the certification data or a revenue generated based on the certification data to the contracting company in pesponse to a guarantee of the contracting company for a user's use of the contracting company point.

2. The relay server of claim 1, wherein the revenue generated based on the certification data includes a carbon credit on the basis of the certification data or an amount obtained by trading the carbon credit.

3. The relay server of claim 1 or 2, wherein the contracting company point-obtaining right is subtracted by purchasing a product or using a service at the relay server or an affiliation server affiliated with the relay server until being exchanged with the contracting company point, and includes a first point which is a preliminary request means that is exchangeable to a usage right of the contracting company point in accordance with exchange application by the user.

4. The relay server of claim 3, wherein an amount of the first point is determined based on a current price of the carbon credit on the basis of the certification data.

5. The relay server of claim 4, wherein the processor is configured to exchange the contracting company point-obtaining right with the contracting company point in accordance with a choice of the user or an expiration of a predetermined period.

6. The relay server of any one of claims 1 to 5, wherein the processor is configured to provide consideration for the contracting company point as much as an amount payment-guaranteed by the contracting company, and
   wherein the amount payment-guaranteed by the contracting company is determined based on a price determined as the condition for a payment for the certification data, the carbon credit on the basis of the certification data, or an amount obtained by trading the carbon credit, to the contracting company at a price lower than a current price of a carbon credit to contracting company.

7. The relay server of claim 1 or 2, wherein the contracting company point-obtaining right includes a first point of which an amount is determined based on a current price of the carbon credit on the basis of the certification data, and
   wherein the processor is configured to provide the certification data or the revenue generated based on the certification data on the basis of a price lower than a current price of a carbon credit to contracting company.

8. The relay server of claim 7, wherein the processor is configured to predetermine an exchange rate for the first point to a contracting company point on the basis of a obtained value of the point of the contracting company based on a price lower than the current price of the carbon credit, with a value of the first point determined based on the current price of the carbon credit, and store the predetermined exchange rate for the first point to the contracting company point.

9. The relay server of claim 7 or 8, wherein the processor is configured to exchange the first point of the user to a contracting company point of a predetermined exchange rate based on the price lower than the current price of the carbon credit.

10. The relay server of any one of claims 7 to 9, wherein the first point is configured to be used in an affiliation server affiliated with the relay server and have an expiration period.

11. The relay server of any one of claims 1 to 10, wherein the contracting company include a plurality of the contracting company, and
wherein the processor is configured to:

select a contracting company among the plurality of the contracting company, and
exchange the contracting company point-obtaining right with the contracting company point of the selected contracting company.

12. The relay server of claim 11, wherein the certification data includes information about a distance that the user moved without using a carbon emission transportation means.

13. The relay server of claim 12, wherein the certification data includes details of second-hand transaction for a transportation means by the user as the certification data.

14. A relay method that is performed by a relay server, the method comprising:

obtaining a certification data for a carbon reduction event performed by a user and providing a contracting company point-obtaining right to the user;
exchanging the contracting company point-obtaining right with a contracting company point payment-guaranteed by a contracting company; and
providing the certification data or a revenue generated based on the certification data to the contracting company in pesponse to a guarantee of the contracting company for a user's use of the contracting company point.

15. A non-transitory computer-readable storage medium including computer executable instructions, wherein the instructions, when executed by a processor, cause the processor to perform a relay method, the method comprising:

obtaining a certification data for a carbon reduction event performed by a user and providing a contracting company point-obtaining right to the user;
exchanging the contracting company point-obtaining right with a contracting company point payment-guaranteed by a contracting company; and
providing the certification data or a revenue generated based on the certification data to the contracting company in pesponse to a guarantee of the contracting company for a user's use of the contracting company point.

Fig. 1

Fig. 2

100

110
MEMORY

120
PROCESSOR

130
I/O INTERFACE

140
COMMUNICATION
INTERFACE

Fig. 3

```
                          ┌─────────┐
                          │  START  │
                          └────┬────┘
                               │
        ┌──────────────────────▼──────────────────────┐
        │   OBTAIN CERTIFICATION DATA FOR CARBON       │
        │   REDUCTION EVENT PERFORMED BY USER AND      │── S1010
        │       PROVIDE CONTRACTING COMPANY            │
        │       POINT-OBTAINING RIGHT TO USER          │
        └──────────────────────┬──────────────────────┘
                               │
        ┌──────────────────────▼──────────────────────┐
        │        OBTAIN CARBON CREDIR BASED ON         │── S1020
        │           OBTAINED CERTIFICATION DATA        │
        └──────────────────────┬──────────────────────┘
                               │
        ┌──────────────────────▼──────────────────────┐
        │     TRANSFER OBTAINED CARBON CREDIR TO       │
        │   CONTRACTING COMPANY AND OBTAIN CONTRACTING │── S1030
        │           COMPANY POINT USE RIGHT            │
        │   PAYMENTED-GUARANTEED BY CONTRACTING COMPANY│
        └──────────────────────┬──────────────────────┘
                               │
        ┌──────────────────────▼──────────────────────┐
        │  EXCHANGE CONTRACTING COMPANY POINT-OBTAINING│
        │  OF USER RIGHT WITH CONTRACTING COMPANY POINT│── S1040
        │          USE RIGHT IN ACCORDANCE WITH        │
        │               APPLICATION BY USER            │
        └──────────────────────┬──────────────────────┘
                               │
                          ┌────▼────┐
                          │   END   │
                          └─────────┘
```

Fig. 4

AVERAGE CARBON FOOTPRINTS FOR
RESPECTIVE TRANSPORTATION MEANS(g/km)

| | |
|---|---|
| HIGH-SPEED TRAIN | 50 |
| BUS | 58 |
| SUBWAY | 60 |
| MOTOR CYCLE (GASOLINE) | 145 |
| CAR (GASOLINE) | 200 |

Fig. 5a

| | | WEIGHT (kg) | CARBON FOOTPRINTS (kgCO2e per kg) |
|---|---|---|---|
| PART MATERIAL | Titanium 3AL-2.5V Alloy | 1 | 8.69 |
| PROPORTION (wt%) | Titanium (Ti) | 93.555 | |
| | Aluminum (Al) | 3.5 | |
| | Vanadium (V) | 2.5 | |
| | Iron (Fe) | 0.2 | |
| | Oxygen (O) | 0.15 | |
| | Carbon (C) | 0.05 | |
| | Nitrogen (N) | 0.03 | |
| | Hydrogen (H) | 0.015 | |

Fig. 5b

| | | WEIGHT (kg) | CARBON FOOTPRINTS (kgCO2e per kg) |
|---|---|---|---|
| PART MATERIAL | Titanium 6AL-4V Alloy | 1 | 9.1 |
| PROPORTION (wt%) | Titanium (Ti) | 90 | |
| | Aluminum (Al) | 6 | |
| | Vanadium (V) | 4 | |
| | Carbon (C) | 0.1 | |
| | Oxygen (O) | 0.2 | |
| | Nitrogen (N) | 0.05 | |
| | Hydrogen (H) | 0.0125 | |
| | Iron (Fe) | 0.3 | |

Fig. 5c

| | | WEIGHT (kg) | CARBON FOOTPRINTS (kgCO2e per kg) |
|---|---|---|---|
| PART MATERIAL | 6061 aluminium alloy | 1 | 7.99 |
| PROPORTION (wt%) | Aluminum (Al) | 95.9 | |
| | Magenesium (Mg) | 1.2 | |
| | Silicon (Si) | 0.8 | |
| | Iron (Fe) | 0.7 | |
| | Copper (Cu) | 0.4 | |
| | Chromium (Cr) | 0.35 | |
| | Zinc (Zn) | 0.25 | |
| | Titanium (Ti) | 0.25 | |
| | Manganese (Mn) | 0.15 | |

Fig. 5d

| | | WEIGHT (kg) | CARBON FOOTPRINTS (kgCO2e per kg) |
|---|---|---|---|
| PART MATERIAL | 7005 aluminium alloy | 1 | 7.76 |
| PROPORTION (wt%) | Aluminum (Al) | 91.19 | |
| | Chromium (Cr) | 0.2 | |
| | Copper (Cu) | 0.1 | |
| | Iron (Fe) | 0.4 | |
| | Magenesium (Mg) | 1.8 | |
| | Manganese (Mn) | 0.7 | |
| | Silicon (Si) | 0.35 | |
| | Titanium (Ti) | 0.06 | |
| | Zinc (Zn) | 5 | |
| | Zirconium (Zr) | 0.2 | |

Fig. 6

Fig. 7

```
                        ┌─────────────┐
                        │    START    │
                        └──────┬──────┘
                               │
                               ▼
    ┌──────────────────────────────────────────────────┐
    │   OBTAIN CERTIFICATION DATA FOR CARBON            │
    │   REDUCTION EVENT PERFORMED BY USER AND           │──S2010
    │   PROVIDE CONTRACTING COMPANY                     │
    │   POINT-OBTAINING RIGHT TO USER                   │
    └──────────────────────────┬───────────────────────┘
                               │
                               ▼
    ┌──────────────────────────────────────────────────┐
    │   EXCHANGE CONTRACTING COMPANY                    │
    │   POINT-OBTAINING RIGHT WITH CONTRACTING COMPANY  │──S2020
    │   POINT PAYMENT-GUARANTEED BY                     │
    │   CONTRACTING COMPANY                             │
    └──────────────────────────┬───────────────────────┘
                               │
                               ▼
    ┌──────────────────────────────────────────────────┐
    │   PROVIDE CERTIFICATION DATA OR REVENUE GENERATED │
    │   BASED ON CERTIFICATION DATA TO CONTRACTING      │
    │   COMPANY IN RESPONSE TO GUARANTEE OF             │──S2030
    │   CONTRACTING COMPANY FOR USER'S USE OF           │
    │   CONTRACTING COMPANY POINT                       │
    └──────────────────────────┬───────────────────────┘
                               │
                               ▼
                        ┌─────────────┐
                        │     END     │
                        └─────────────┘
```

Europäisches
Patentamt

European
Patent Office

Office européen
des brevets

# EUROPEAN SEARCH REPORT

**Application Number**

**EP 23 19 3029**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 420 061 B1 (FAVICON CO LTD [KR]) 12 July 2022 (2022-07-12) <br> * paragraphs [0001], [0008] - [0019] * <br> * paragraphs [0027] - [0038] * <br> * paragraphs [0044] - [0050] * <br> * paragraphs [0099] - [0113] * <br> * paragraphs [0126] - [0135] * | 1-15 | INV. <br> G06Q30/0226 <br> G06Q50/30 |
| X | US 2021/248694 A1 (TIAN XINLI [CN] ET AL) 12 August 2021 (2021-08-12) <br> * paragraphs [0004] - [0009] * <br> * paragraphs [0022] - [0025] * <br> * paragraphs [0030], [0031], [0034], [0035] * <br> * paragraphs [0059], [0065], [0073] - [0076] * | 1-15 | |
| X | WO 2011/037357 A2 (DAEHUNG DATA COMM CO LTD [KR]; CHONG CHINE HWA [KR]; CHU EUGENE [KR]) 31 March 2011 (2011-03-31) <br> * the whole document * | 1-15 | |
| | | | TECHNICAL FIELDS SEARCHED (IPC) |
| A | KR 102 399 012 B1 (WRIGHTBROTHERS CO LTD [KR]) 17 May 2022 (2022-05-17) <br> * paragraphs [0001] - [0013], [0029] * | 1,14,15 | G06Q |

The present search report has been drawn up for all claims

| Place of search | Date of completion of the search | Examiner |
|---|---|---|
| The Hague | 27 November 2023 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 3029

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2023

| Patent document cited in search report | | Publication date | Patent family member(s) | | Publication date |
|---|---|---|---|---|---|
| KR 102420061 | B1 | 12-07-2022 | CN | 116976887 A | 31-10-2023 |
| | | | EP | 4270293 A1 | 01-11-2023 |
| | | | JP | 2023164397 A | 10-11-2023 |
| | | | KR | 102420061 B1 | 12-07-2022 |
| | | | US | 2023351408 A1 | 02-11-2023 |
| US 2021248694 | A1 | 12-08-2021 | AU | 2019293522 A1 | 07-01-2021 |
| | | | CN | 110634069 A | 31-12-2019 |
| | | | EP | 3811310 A1 | 28-04-2021 |
| | | | JP | 2021530036 A | 04-11-2021 |
| | | | SG | 11202012069X A | 28-01-2021 |
| | | | US | 2021248694 A1 | 12-08-2021 |
| | | | WO | 2020003202 A1 | 02-01-2020 |
| WO 2011037357 | A2 | 31-03-2011 | KR | 100966162 B1 | 25-06-2010 |
| | | | WO | 2011037357 A2 | 31-03-2011 |
| KR 102399012 | B1 | 17-05-2022 | CN | 115880112 A | 31-03-2023 |
| | | | EP | 4156048 A1 | 29-03-2023 |
| | | | JP | 7333982 B2 | 28-08-2023 |
| | | | JP | 2023048997 A | 07-04-2023 |
| | | | KR | 102360491 B1 | 09-02-2022 |
| | | | KR | 102399012 B1 | 17-05-2022 |
| | | | US | 2023101390 A1 | 30-03-2023 |

EPO FORM P0459

For more details about this annex : see Official Journal of the European Patent Office, No. 12/82